# EUROPÄISCHE PATENTSCHRIFT

(11) **EP 2 709 870 B1**
(45) Veröffentlichungstag und Bekanntmachung des Hinweises auf die Patenterteilung: **12.06.2019**
(21) Anmeldenummer: 12718086.7
(22) Anmeldetag: 30.04.2012
(51) Int. Cl.: B60K 37/06

(54) **VERFAHREN UND SYSTEM ZUM BEREITSTELLEN EINER NUTZERSCHNITTSTELLE IN EINEM FAHRZEUG**
METHOD AND SYSTEM FOR PROVIDING A USER INTERFACE IN A VEHICLE
PROCÉDÉ ET SYSTÈME PERMETTANT D'OBTENIR UNE INTERFACE UTILISATEUR DANS UN VÉHICULE

(30) Priorität: 17.05.2011 DE 102011101808
(43) Veröffentlichungstag der Anmeldung: 26.03.2014
(73) Patentinhaber: Volkswagen Aktiengesellschaft, 38436 Wolfsburg (DE); Audi AG, 85045 Ingolstadt (DE)
(72) Erfinder: WÄLLER, Christoph, 38106 Braunschweig (DE); MEJIA, Maria, 38104 Braunschweig (DE); BENDEWALD, Lennart, 38442 Wolfsburg (DE); HENZE, Stefan, 38114 Braunschweig (DE)
(86) Internationale Anmeldenummer: PCT/EP2012/001868
(87) Internationale Veröffentlichungsnummer: WO 2012/156029

(56) Entgegenhaltungen:
- WO-A1-2006/125515
- WO-A1-2008/091727
- US-A1- 2006 155 431

## Beschreibung

Die vorliegende Erfindung betrifft ein Verfahren und ein System zum Bereitstellen einer Nutzerschnittstelle in einem Fahrzeug, bei dem eine drahtlose Datenverbindung zwischen dem Fahrzeug und einem mobilen Wiedergabegerät, das in dem Fahrzeug lösbar verbunden ist oder das von einem Nutzer in dem Fahrzeug frei gehalten wird, aufgebaut wird.

Es ist bekannt, tragbare bzw. mobile elektronische Geräte lösbar in einem Fahrzeug zu befestigen und mit anderen Einrichtungen des Fahrzeugs zu koppeln. Beispielsweise sind Freisprecheinrichtungen für Mobiltelefone bekannt, bei denen das Mobiltelefon von einer mechanischen Halterung aufgenommen wird und mittels eines Steckers so mit dem Fahrzeug verbunden wird, dass beim Telefonieren ein im Innenraum des Fahrzeugs untergebrachtes Mikrofon sowie die Lautsprecher des Fahrzeugs genutzt werden können. Ferner gibt es Konzepte für lösbare Navigationsgeräte im Fahrzeug, mithilfe derer Navigationsfunktionen flexibel nachgerüstet werden können.

Die Kopplung von mitgebrachten Geräten im Fahrzeug ist jedoch nicht auf Kommunikationslösungen und Fahrerassistenzsysteme beschränkt. Es wurden des Weiteren verschiedene Lösungen angegeben, auch Wiedergabegeräte der Unterhaltungselektronik mit den Fahrzeugeinrichtungen zu koppeln.

Die EP 1 809 511 B1 beschreibt beispielsweise ein Gehäuse zum sicheren Aufnehmen eines lösbar verbundenen elektronischen Abspielgeräts in einem Fahrzeugsitz, welches durch die mechanische Verbindung gleichzeitig datentechnisch und elektrisch mit dem Fahrzeug verbindbar ist, z.B. durch entsprechende Pins und Stecker in der Halterung. Dabei können auch im lösbar verbundenen Abspielgerät gespeicherte Audio- und Videodaten über die Fahrzeuglautsprecher und Bildschirme an anderen Positionen im Fahrzeug ausgegeben werden.

In der DE 10 2005 038 969 A1 wird ein Unterhaltungssystem mit einem Medienzentrum und einem tragbaren Displaygerät beschrieben. Dabei wird ein lösbares Befestigungskonzept für das tragbare Displaygerät in der Kopfstütze eines Fahrzeugs beschrieben. Die datentechnische Übertragung vom Medienzentrum zum Displaygerät kann über Funk erfolgen, insbesondere über WLAN (Wireless Local Area Network).

Die EP 2 098 137 A1 beschreibt eine Haltevorrichtung, um einen Computer in einem Fahrzeug typischerweise an einer Zwischenwand im Fahrzeug aufzunehmen, insbesondere den Rückenlehnen der Vordersitze.

Die EP 0 807 878 A1 beschreibt eine Docking Station für einen tragbaren Computer für die Benutzung in einem Fahrzeug. Dabei wird der Computer so positioniert, dass er gut bedient werden kann und nicht mit anderen Fahrzeugeinrichtungen interferiert (z.B. mit dem Airbag). Ferner werden stabile Umgebungsbedingungen, z.B. mittels einer Heizvorrichtung zum Beheizen beim Start während kalter Außentemperaturen, bereitgestellt.

Die DE 10 2005 058 113 B4 beschreibt ein DVD-Abspielgerät (DVD = Digital Versatile Disk) für ein Kraftfahrzeug, bei dem Abspielgerät und Monitor in einem Gehäuse als einteiliges Gerät vorhanden sind und in ein Aufnahmegehäuse aufnehmbar oder einschiebbar sind.

Die US 2010/0124005 A1 beschreibt ein Gehäuse für ein Anzeigegerät in einem Fahrzeug, bei dem das Gerät in eine gewünschte Position/ Richtung drehbar ist. Dabei kann die Anzeigequalität in Abhängigkeit von dem situationsspezifischen Anzeige- bzw. Betrachtungswinkel optimiert werden.

Die WO 2008/091727 A1 beschreibt ein Steuerungssystem in einem Fahrzeug, welches mit den verschiedenen Einrichtungen des Fahrzeugs verbunden ist. Das Steuerungssystem kann einem Fahrzeuginsassen mittels einer ersten Schnittstelle Informationen von externen Geräten, beispielsweise mobilen Endgeräten, die ein Nutzer mit in das Fahrzeug bringt, bereitstellen. Weiterhin umfasst das Steuersystem ein Display für Anzeigeinhalte und mehrere mechanische Bedienelemente, welche um das Display für die Anzeigeinhalte herum angeordnet sind. Dabei kann auf dem mobilen Endgerät ein Anzeigeinhalt angezeigt werden, der dem Anzeigeinhalt des Displays entspricht.

Die WO 2006/125515 A1 beschreibt ebenso ein Kommunikationssystem mit einer Bedieneinheit, einer Ausgabeeinheit und einem Schnittstellenrechner. Dabei kann über den Schnittstellenrechner ein mobiles Endgerät mit der Bedieneinheit und der Ausgabeeinheit verbunden werden. Zudem können Informationen des mobilen Endgeräts auf der Ausgabeeinheit angezeigt werden und das mobile Endgerät über Bedienelemente der Bedieneinheit des Kommunikationssystems bedient werden.

Die US 2006/0155431 A1 ist der nächstliegnde Stand der Technik und beschreibt ein Informationssystem mit einem externen Kommunikator, beispielsweise einem Mobiltelefon, mit einem Display. Zudem umfasst das Informationssystem ein Bedienelement, beispielsweise an einem Lenkrad, mittels welchem Fahrzeugfunktionen bedient werden können. Das Bedienelement kann auch auf dem Display des Mobiltelefons angezeigt werden und das Informationssystem über das Mobiltelefon gesteuert werden.

Es ist die Aufgabe der vorliegenden Erfindung, ein Verfahren und ein System zum Bereitstellen einer Nutzerschnittstelle für ein mobiles Wiedergabegerät anzugeben, das in dem Fahrzeug lösbar verbunden ist oder das von einem Nutzer in dem Fahrzeug frei gehalten wird. Dabei soll eine flexible, auf die jeweilige Nutzungssituation abgestimmte Bedienung ermöglicht werden.

Diese Aufgabe wird erfindungsgemäß durch ein Verfahren mit den Merkmalen des Anspruchs 1 und durch ein System mit den Merkmalen des Anspruchs 6 gelöst. Vorteilhafte Aus- und Weiterbildungen ergeben sich aus den abhängigen Ansprüchen.

Bei dem erfindungsgemäßen Verfahren zum Bereitstellen einer Nutzerschnittstelle in einem Fahrzeug werden für den Betrieb des Fahrzeugs relevante Betriebsparameter fahrzeugseitig erfasst und es werden über eine von der Sitzposition des Fahrers ablesbare, fest im Fahrzeug angeordnete Anzeige- und Bedieneinrichtung Informationen über erfasste Betriebsparameter angezeigt. Es wird eine drahtlose Datenverbindung zwischen dem Fahrzeug und einem mobilen Wiedergabegerät, das in dem Fahrzeug lösbar verbunden ist oder das von einem Nutzer in dem Fahrzeug frei gehalten wird, aufgebaut, es werden Daten zur Erzeugung eines Anzeigeinhalts über die drahtlose Datenverbindung vom Fahrzeug an das Wiedergabegerät übertragen und es wird basierend auf den übertragenen Daten ein Anzeigeinhalt auf dem Wiedergabegerät erzeugt, welcher auf der Anzeige- und Bedieneinrichtung angezeigte Informationen über erfasste Betriebsparameter umfasst. Hierdurch kann eine Anzeige der für den Betrieb des Fahrzeugs relevanten Daten, insbesondere eine Ansicht des Cockpits des Fahrzeugs, an beliebiger Stelle im Fahrzeug und auf mitgebrachten mobilen Wiedergabegeräten erfolgen. Dabei werden auf dem Wiedergabegerät wenigstens ein Teil der aus der Sitzposition des Fahrers bedienbaren Bedienelemente wiedergegeben, wobei mittels einem der auf dem Wiedergabegerät wiedergegebenen Bedienelemente eine Fahrzeugfunktion bedient wird, wobei mechanische Bedienelemente durch Symbole dargestellt werden. Erfindungsgemäß wird das Wiedergabegerät an einer Position, welche einer bestimmten Sitzposition zugeordnet ist, lösbar in dem Fahrzeug befestigt und es wird in einen anderen Bedienmodus gewechselt, wenn das Wiedergabegerät in eine der Sitzposition zugeordneten Halterung eingesteckt wird, in dem das Wiedergabegerät über ein dieser Sitzposition zugeordnetes, fest im Fahrzeug eingebautes Bedienelement bedient wird.

Betriebsparameter des Fahrzeugs sind aktuell anfallende Daten des Fahrzeugs, die mit dem Betrieb und der Fortbewegung des Fahrzeugs assoziiert sind. Sie umfassen insbesondere die Fahrzeuggeschwindigkeit, die Motordrehzahl, Informationen zur Getriebestellung, Tank- und Verbrauchsinformationen sowie Informationen zur Fahrzeugklimatisierungsanlage. Sie können auch fahrzeugseitig erfasste Fahrerassistenzdaten umfassen. Die Anzeige solcher Betriebsparameter erfolgt typischerweise in Echtzeit. Die fahrzeugseitige Erfassung dieser Betriebsparameter erfolgt über dem Fahrzeug fest zugeordnete, fest im Fahrzeug installierte Erfassungseinrichtungen, z.B. einer Tachometerwelle oder verschiedene Betriebssensoren. Die auf der Anzeige- und Bedieneinrichtung angezeigte Information kann außer der Anzeige der Betriebsparameter weitere Anzeigeinhalte vorsehen, z.B. Ausgabeinhalte einer Infotainmenteinrichtung wie z.B. ein graphisches Nutzermenü zum Bedienen des Radios.

Ein dazu geeignetes mobiles Wiedergabegerät dafür kann z.B. ein Laptop-Computer sein, insbesondere Computer mit einer berührungsempfindlichen Bedienoberfläche, die auch als sogenannte "Tablet-PC" bekannt sind. Es können aber auch andere Wiedergabegeräte, insbesondere mit einer freiprogrammierbaren Anzeigefläche oder mit Touchscreen, wie z.B. DVD-Spieler oder ähnliche Medienabspielgeräte, verwendet werden. Ein weiterer Vorteil besteht daher darin, dass durch die rasante technologische Fortentwicklung der Displaytechnologie von den kürzeren Marktzyklen der Unterhaltungselektronik gegenüber den Marktzyklen des Fahrzeugbaus profitiert werden kann. So kann auf ein Hochrüsten der fest im Fahrzeug vorgesehenen Anzeigeflächen mittel- und langfristig gegebenenfalls verzichtet werden.

Die drahtlose Datenverbindung kann über an sich bekannte Techniken erfolgen, insbesondere mittels Funktechnologien im Nahbereich wie z.B. über WLAN (Wireless Local Area Network) oder über Bluetooth, alternativ auch mittels einer Infrarotschnittstelle

Ein beliebiger Fahrzeuginsasse kann sich bei dem erfindungsgemäßen Verfahren eine realitätsnahe Cockpitansicht auf einem mitgebrachten Wiedergabegerät darstellen lassen, wobei die Darstellung nicht auf bereits im Fahrzeug digitalisiert angezeigte Anzeigeinhalte beschränkt bleibt.

Da bei dem erfindungsgemäßen Verfahren mittels einem auf dem Wiedergabegerät wiedergegebenen Bedienelement eine Fahrzeugfunktion bedient wird, kann ein beliebiger Fahrzeuginsasse das mobile Wiedergabegeräte als virtuelles Cockpit nutzen und beispielsweise auch aus einer Position eine Fahrzeugeinrichtung bedienen, die sonst nur über Bedienelemente im Cockpit oder über anderweitige fest installierte Bedienelemente im Fahrzeug bedient werden könnten. Hierdurch ergibt sich eine hohe Flexibilisierung, weil bei der Bedienkonzeption des Fahrzeugs nicht vorab definiert werden muss, welche Fahrzeugfunktion von wo aus zur Bedienung verfügbar gemacht werden muss. Dies ist z.B. vorteilhaft für die Bedienung von Komfortfunktionen, insbesondere bei der Einstellung der Sitze und der Klimaanlage, oder für die Bedienung der Insassenunterhaltung, z.B. um die Lautstärke einer Audioausgabe zu verändern. Es kann dabei vorgesehen sein dass durch die Bedienung eines auf dem Wiedergabegerät wiedergegebenen Bedienelements der Anzeigeinhalt der Anzeige- und Bedieneinrichtung verändert wird. Insgesamt lässt sich das mitgebrachte, mobile Wiedergabegerät als Fernbedienung zum Bedienen der Fahrzeugfunktionen nutzen. Jene Fahrzeugfunktionen, deren Bedienung z.B. dem Fahrer vorbehalten werden soll, können immer noch softwaremäßig entsprechend gesperrt werden.

In einer Ausgestaltung des erfindungsgemäßen Verfahrens ist vorgesehen, dass auf dem Wiedergabegerät ein Teilbereich des Anzeigeinhalts, der von der auf der Anzeige- und Bedieneinrichtung angezeigten Information umfasst ist, ausgewählt wird und der ausgewählte Teilbereich des Anzeigeinhalts hervorgehoben und/oder vergrößert dargestellt wird. Hierdurch wird dem Fahrzeuginsassen von einer beliebigen Position im Fahrzeug, in der er gerade das mobile Wiedergabegerät hält oder lösbar befestigt hat, sich auf einen Teilbereich der Cockpitansicht zu fokussieren. Die Fokussierung muss sich nicht auf jenen Teil der Cockpitansicht richten, der auch die Betriebsparameter anzeigt. Der Fahrzeuginsasse möchte die Ansicht beispielsweise auf das Nutzermenü zum Bedienen des Radios fokussieren.

In noch einer Ausgestaltung des erfindungsgemäßen Verfahrens ist vorgesehen, dass auf dem Wiedergabegerät wenigstens ein Teil der aus der Sitzposition des Fahrers ablesbaren Funktionsanzeigen wiedergegeben werden, wobei mechanische analoge Funktionsanzeigen durch Symbole dargestellt werden. Ein beliebiger Fahrzeuginsasse kann sich somit eine realitätsnahe Cockpitansicht auf einem mitgebrachten Wiedergabegerät darstellen lassen, wobei die Darstellung nicht auf bereits im Fahrzeug digitalisiert angezeigte Anzeigeinhalte beschränkt bleibt.

Erfindungsgemäß kann vorgesehen sein, dass durch die Bedienung eines auf dem Wiedergabegerät wiedergegebenen Bedienelements eine Mitteilung an den Fahrer des Fahrzeugs übermittelt wird. Diese Mitteilung wird beispielsweise auf der Anzeige- und Bedieneinheit im Cockpit ausgegeben, wobei die Mitteilung eine Empfehlung sein kann, die vom Fahrer entsprechend zu bestätigen ist. Hierdurch kann ein Interaktionsmodus zur Verfügung gestellt werden, über den die Fahrzeuginsassen mit dem Fahrer kommunizieren können. Dabei können die verfügbaren Fahrzeugfunktionen z.B. in drei Kategorien eingeteilt sein: a) Funktionen, die frei von den Insassen über mitgebrachte Wiedergabegeräte bedienbar sind, b) Funktionen, die die Insassen zwar vorauswählen können, zu deren Auslösung es aber einer Bestätigung des Fahrers bedarf und c) Funktionen, deren Bedienung dem Fahrer vorbehalten ist.
In weiteren Ausgestaltungen des erfindungsgemäßen Verfahrens können auf dem Wiedergabegerät fahrzeugseitig erfasste, aus dem Fahrzeug heraus aufgenommene Bewegtbilder angezeigt werden. Diese können auf mitgebrachten Geräten, wenn diese großflächiger sind oder über eine hochwertigere Displaytechnologie verfügen, besser dargestellt werden. Dabei kann vorgesehen sein, dass die Bewegtbilder von Bildern überlagert werden, welche Fahrerassistenzinformationen oder Bildverbesserungsmittel umfassen, z.B. Bremswegeinzeichnungen und Kontrastbearbeitung. Ferner kann für Unterhaltungszwecke, insbesondere für Kinder auf den Rücksitzen des Fahrzeug, vorgesehen sein, dass die Bewegtbilder von Bildern überlagert werden, welche Fahrgastinformationen, wie z.B. Touristeninformationen, oder Objekte umfassen, die für mit den Bewegtbildern assoziierte realitätsnahe Spiele verwertbar sind. Beispielsweise müssen als Spielidee in einer realitätsnahen Kameraeinstellung der Vorausfahrt des Fahrzeugs virtuell eingeblendete Kollisionsobjekte durch Antippen beseitigt werden.

Weiterhin kann vorgesehen sein, dass Mediendateien von dem Wiedergabegerät über die Fahrzeuginformationsinfrastruktur ausgegeben werden. Es kann z.B. ein auf einem mitgebrachten DVD-Spieler gespeicherter Musiktitel über die Fahrzeuglautsprecher ausgegeben werden.

Das erfindungsgemäße System zum Bereitstellen einer Nutzerschnittstelle in einem Fahrzeug umfasst eine im Fahrzeug fest angeordneten Erfassungseinrichtung, über welche für den Betrieb des Fahrzeugs relevante Betriebsparameter fahrzeugseitig erfassbar sind, eine aus der Sitzposition des Fahrers ablesbare, fest im Fahrzeug angeordneten Anzeige- und Bedieneinrichtung, über welche Informationen, insbesondere Informationen über erfasste Betriebsparameter, anzeigbar sind, und ein lösbar mit dem Fahrzeug verbundenes oder von einem Nutzer im Fahrzeug frei gehaltenes, mobiles Wiedergabegerät. Das erfindungsgemäße System umfasst des Weiteren eine drahtlose Datenschnittstelle zwischen dem Wiedergabegerät und dem Fahrzeug, über welche Daten zur Erzeugung eines Anzeigeinhalts vom Fahrzeug an das Wiedergabegerät übertragbar sind, und eine Steuereinheit, die mit der Erfassungseinrichtung, der Anzeige- und Bedieneinrichtung und der Datenschnittstelle verbunden ist. Bei dem erfindungsgemäßen System ist mittels der Steuereinheit basierend auf den übertragenen Daten ein Anzeigeinhalt auf dem Wiedergabegerät erzeugbar, welcher auf der Anzeige- und Bedieneinrichtung angezeigte Informationen über erfasste Betriebsparameter umfasst. Dabei sind auf dem Wiedergabegerät wenigstens ein Teil der aus der Sitzposition des Fahrers bedienbare Bedienelemente wiedergebbar, wobei mittels einem der auf dem Wiedergabegerät wiedergegebenen Bedienelemente eine Fahrzeugfunktion bedienbar ist, wobei mechanische Bedienelemente durch Symbole darstellbar sind. Das erfindungsgemäße System ist dadurch gekennzeichnet, dass das Wiedergabegerät an einer Position, welche einer bestimmten Sitzposition zugeordnet ist, lösbar in dem Fahrzeug befestigt ist, wobei das Wiedergabegerät in eine der Sitzposition zugeordneten Halterung eingesteckt ist, so dass es in einen anderen Bedienmodus wechselt, in dem das Wiedergabegerät über ein dieser Sitzposition zugeordnetes, fest im Fahrzeug eingebautes Bedienelement bedienbar ist.

Hierdurch kann der Anzeigeinhalt auf dem Wiedergabegerät individualisiert werden. Je nach Sitzposition ist beispielsweise der auswählbare und/oder bedienbare Anzeigeinhalt unterschiedlich festgesetzt.

Das erfindungsgemäße System ist insbesondere zum Durchführen des erfindungsgemäßen Verfahrens ausgestaltet. Es weist somit auch die genannten Vorteile auf.

Das Wiedergabegerät kann dabei lösbar in dem Fahrzeug befestigt sein, sodass der Anzeigeinhalt an einer nicht aus der Sitzposition des Fahrers betrachtbaren Position des Fahrzeugs, insbesondere auf einem der Rücksitze des Fahrzeugs, wiedergegeben wird.

In einer Ausgestaltung des erfindungsgemäßen System ist vorgesehen, dass das Wiedergabegerät lösbar in dem Fahrzeug befestigt ist und das Wiedergabegerät über ein dem Fahrzeug zugeordnetes Bedienelement, insbesondere einer berührungsempfindlichen Bedienfläche, bedienbar ist. Es kann dadurch ausreichend sein, je Sitzplatz ein universelles Bedienelement vorzusehen, über welches durch die flexibel je nach Nutzungssituation dargestellte Information auf dem mitgebrachten Wiedergabegerät eine an die Situation angepasste Bedienschnittstelle zur Verfügung gestellt wird. Es werden z.B. Nutzermenüs oder Schaltflächen an Positionen auf dem Wiedergabegerät angezeigt, die durch das Berühren eines Touchpads an den diesen Positionen zugeordneten Positionen des Touchpads bedient werden können. Dies vereinfacht den Aufbau des Bediensystems im Fahrzeug, reduziert gegebenenfalls die Variantenzahl und trägt somit zur Kostensenkung bei.

Die lösbare Befestigung des Wiedergabegeräts im Fahrzeug erfolgt beispielsweise durch ein Einrasten in einer entsprechen dafür vorgesehenen Halterung, wobei das Einrasten sensorisch erfasst werden kann und dadurch der Wechsel des Bedienmodus ausgelöst wird. Dabei kann die Datenverbindung weiterhin drahtlos erfolgen, es kann aber auch ein Wechsel von der drahtlosen Verbindung zu einer drahtgebundenen Verbindung erfolgen, wenn in der vorgesehenen Halterung eine entsprechende Schnittstelle vorgesehen ist.

Erfindungsgemäß ist ein Fahrzeug mit einem solchen System ausgestattet, wobei alle das Fahrzeug betreffende Systemvoraussetzungen erfüllt werden und eine Datenschnittstelle zum Aufbau der drahtlosen Datenverbindung mit dem mobilen Wiedergabegerät eingerichtet ist. Ein so erfindungsgemäßes Fahrzeug kann insbesondere für mobile Wiedergabegeräte passende Halterungen umfassen.

Die Erfindung wird nun anhand von Ausführungsbeispielen mit Bezug zu den Figuren näher erläutert.
- Figur 1: zeigt eine Ansicht einer Fahrgastzelle eines Fahrzeugs mit einem System zum Bereitstellen einer Nutzerschnittstelle gemäß einem Ausführungsbeispiel der Erfindung,
- Figur 2: zeigt schematisch den Prinzipaufbau eines Systems zum Bereitstellen einer Nutzerschnittstelle gemäß einem Ausführungsbeispiel der Erfindung und
- die Figuren 3a - 3e: zeigen Anzeigeinhalte auf einem im Fahrzeug mitgebrachten Wiedergabegerät, die gemäß einem Ausführungsbeispiel des erfindungsgemäßen Verfahrens erzeugt wurden.

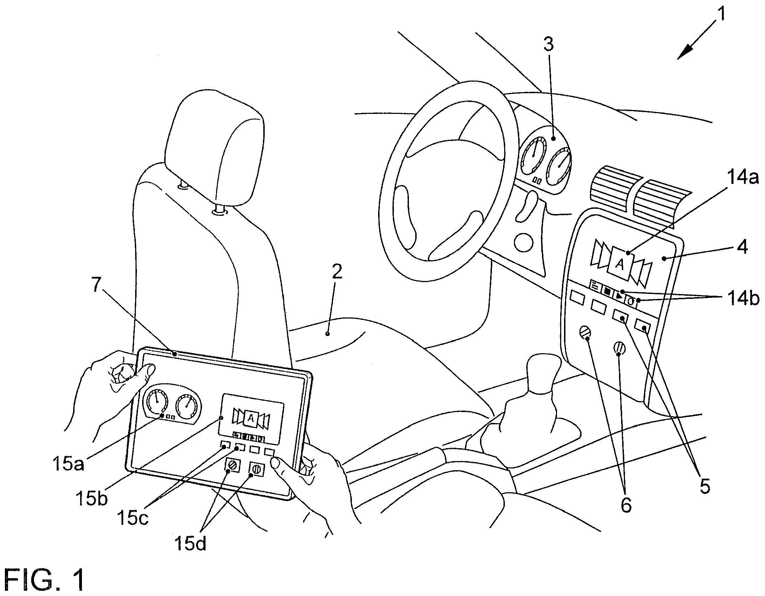

In der Figur 1 ist eine Ansicht einer Fahrgastzelle eines Fahrzeugs 1 mit einem System zum Bereitstellen einer Nutzerschnittstelle gemäß einem Ausführungsbeispiel der Erfindung dargestellt. Das System umfasst eine Kombianzeige mit Rundinstrumenten 3 zum Darstellen von Betriebsparametern des Fahrzeugs 1, ein Multifunktionsdisplay 4 zum Darstellen verschiedener Informationen, beispielsweise von Ausgabeinhalten 14a, 14b diverser Funktionseinrichtungen im Fahrzeug 1, sowie verschiedene mechanische Tastschalter 5 und Drehschalter 6. Die Tastschalter 5 und die Drehschalter 6 können selber kontextspezifische Anzeigen umfassen. Sie können z.B. je nach Bediensituation in verschiedenen Farben hinterleuchtet werden, um dem Fahrer eine visuelle Unterstützung bei den Bedienaktionen zu bieten. Die genannten Anzeige- und Bedienelemente sind vom Fahrersitz 2 aus gut ablesbar und bedienbar und werden im folgenden auch als "Cockpit"-Ansicht bezeichnet.

Die darstellbaren Betriebsparameter in den Rundinstrumenten 3 umfassen dabei typischerweise die Geschwindigkeit und die Motordrehzahl. In oder unterhalb der Rundinstrumente 3 können weitere Anzeigen vorgesehen sein, über die beispielsweise der Durchschnittsverbrauch oder die Restreichweite ausgelesen werden kann. Der Fahrer kann beispielsweise über einen zyklischen Schalter an einem Hebel am Lenkrad mehrere solche Betriebsparameter zyklisch durchwechseln (nicht dargestellt).

Das Multifunktionsdisplay 4 ist vorzugsweise als Touchscreen ausgestaltet, sodass eine Bedienung direkt über auf dem Multifunktionsdisplay 4 dargestellte Schaltflächen 14b möglich ist. Alternativ oder auch zusätzlich können dem Multifunktionsdisplay 4 Tastschalter 5 zugeordnet sein, über die fest zugeordnete Funktionen oder kontextspezifisch festgelegte Funktionen, die auf dem Multifunktionsdisplay 4 angezeigt werden (sogenannte Softkey-Funktion) bedient werden. Es können insbesondere Ausgabeinhalte 14a eines Navigationsgeräts, einer Infotainmenteinrichtung oder der Komforteinrichtungen im Fahrzeug 1, z.B. der Klimaanlage, dargestellt werden.

Die Drehschalter 6 sind beispielsweise zum Einstellen von Komfortfunktionen im Fahrzeug 1 vorgesehen. Über sie kann beispielsweise die Temperatur oder Lüftungsstärke der Klimaanlage im Fahrzeug 1 verändert werden.

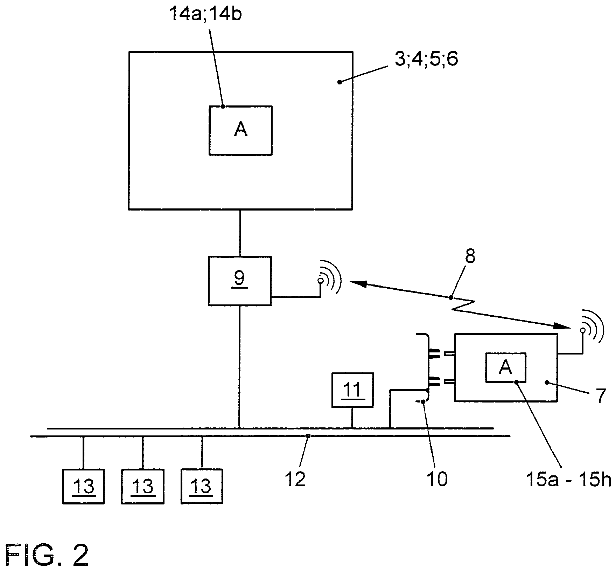

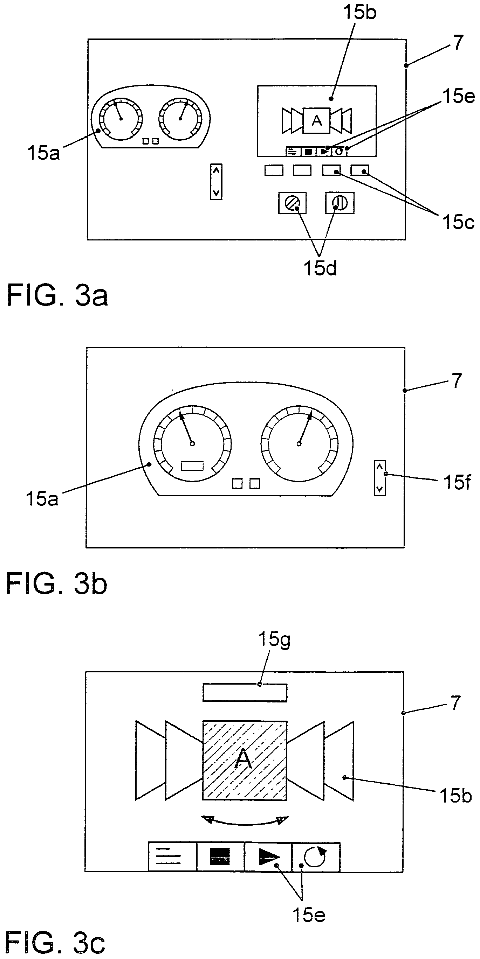

Das System umfasst des Weiteren ein mobiles, von einem Nutzer mitgebrachtes Wiedergabegerät 7, in diesem Falle ein sogenannter Tablet-PC mit einem Touchscreen, welche im Fahrzeug 1 frei gehalten wird oder wahlweise mit dem Fahrzeug 1 lösbar verbunden werden kann. Vom Fahrzeug 1 können erfindungsgemäß Daten auf das Tablet-PC 7 übertragen und basierend auf den Daten dort Anzeigeinhalte 15a - 15l angezeigt werden, wie dies nun anhand des Prinzipaufbaus eines Ausführungsbeispiels des erfindungsgemäßen Systems mit Bezug zu der Figur 2 und anhand eines Ausführungsbeispiels des erfindungsgemäßen Verfahrens mit Bezug zu den Figuren 3a - 3e näher erläutert wird.

In der Figur 2 ist schematisch der Prinzipaufbau eines Systems zum Bereitstellen einer Nutzerschnittstelle gemäß einem Ausführungsbeispiel der Erfindung dargestellt. Eine Anzeige- und Bedieneinrichtung 3, 4, 5, 6, beispielsweise die in der Figur 1 dargestellte Anzeige- und Bedieneinrichtung 3, 4, 5, 6, ist mit einer Steuereinheit 9 verbunden. Die Steuereinheit 9 ist ferner über den Datenbus 12 im Fahrzeug 1 mit eine Reihe von Betriebparametersensoren 13 verbunden, über welche für den Betrieb des Fahrzeugs 1 relevante Betriebsparameter fahrzeugseitig erfasst werden können, sodass die Betriebsparameter auf der Anzeige- und Bedieneinrichtung 3, 4, 5, 6, angezeigt werden können.

Die Steuereinheit 9 ist ferner mit einer Funkschnittstelle 8 verbunden, über welche eine Funkverbindung zwischen dem Fahrzeug 1 und einem mobilen, mitgebrachten Wiedergabegerät 7, z.B. einem Tablet-PC, hergestellt werden kann. Der Tablet-PC 7 wird beispielsweise beim Eintritt in die Fahrgastzelle automatisch erfasst und die Verbindung wird automatisch aufgebaut. Alternativ kann die Verbindung auch manuell vom Tablet-PC 7 aus aktiviert werden. Dabei können Steuerungsdaten bidirektional zwischen der Steuereinheit 9 und dem Tablet-PC 7 ausgetauscht werden. Die Steuerung der Anzeigeinhalte 15a - 15l auf dem Tablet-PC 7 sowie gegebenenfalls die Steuerung von Fahrzeugfunktionen über die auf dem Tablet-PC 7 wiedergegebene Bedienelemente 15c - 15f wird weiter unten im Zusammenhang mit dem erfindungsgemäßen Verfahren näher beschrieben.

Der Tablet-PC 7 kann dabei frei gehalten werden oder in einer dafür vorgesehenen Halterung 10 befestigt werden. Es können mehrere solche Halterungen 10 vorgesehen sein, beispielsweise eine pro Sitzposition. Bei der Befestigung in der Halterung 10 kann dabei dem Tablet-PC eine Sitzposition im Fahrzeug zugeordnet werden und ein dem jeweiligen Sitzplatz zugeordnetes Touchpad 11 aktiviert werden, über welches der Nutzer dann weitere Eingaben tätigen kann. Bei der Befestigung des Tablet-PCs 7 in der Halterung 10 werden beispielsweise Kontakte geschlossen, welche ein Steuersignal an die Steuereinheit 9 aussenden. Dabei kann die zuvor aufgebaute Funkverbindung über die Funkschnittstelle 8 gegebenenfalls auf eine drahtgebundene Verbindung gewechselt werden, indem die Steuersignale zwischen der Steuereinheit 9 und dem Tablet-PC 7 über den Datenbus 12 des Fahrzeugs 1 versendet werden. Die Datenkommunikation zwischen Fahrzeug 1 und Tablet-PC 7 kann aber weiterhin über die Funkschnittstelle 8 erfolgen.

Das erfindungsgemäße Verfahren wird nun anhand eines Ausführungsbeispiels mit Bezug zu den Figuren 3a - 3e beschrieben. Dazu können die mit Bezug zu den Figuren 1 und 2 beschriebenen Systeme verwendet werden.

In der Figur 3a ist ein Anzeigeinhalt 15a - 15e auf dem im Fahrzeug 1 mitgebrachten Tablet-PC 7 dargestellt, der gemäß einem Ausführungsbeispiel des erfindungsgemäßen Verfahrens erzeugt wurde. Nach der Erfassung des Tablet-PCs 7 im Fahrzeug 1 wird eine Datenverbindung über die Funkschnittstelle 8 aufgebaut und es werden auf dem Tablet-PC 7 die Cockpit-Ansicht der Anzeige- und Bedieneinrichtung 3, 4, 5, 6 dargestellt. Die Darstellung der Betriebsparameter wird dabei gemäß den von den Betriebsparametersensoren 13 erfassten Werten laufend aktualisiert. Die mechanische Kombianzeige der Rundinstrumente 3 wird als Anzeigeinhalt 15a und die digitalen Ausgabeinhalte 14a der Multifunktionsanzeige 4 werden als Anzeigeinhalt 15b dargestellt. Die mechanischen Tastschalter 5 sowie die Drehschalter 6 werden als Anzeigeinhalte 15c und 15d dargestellt. Die auf der Multifunktionsanzeige 4 dargestellten Schaltflächen 14b werden als Ausgabeinhalte 15e dargestellt.

Solange der Nutzer das Tablet-PC frei hält, ist eine Bedienung über den Touchscreen des Tablet-PC 7 möglich, indem der Nutzer die betreffenden Anzeigeinhalte durch an sich bekannte Bediengesten auswählt oder ihnen zugeordnete Funktion auslöst. Bei dem Nutzer handelt es sich im Normalfall nicht um den Fahrer des Fahrzeugs. Es ist beispielsweise ein Mitfahrer auf einem der Rücksitze des Fahrzeugs 1. Über den Tablet-PC 7 hat er die Möglichkeit, die Anzeige- und Bedieneinrichtung auch aus dem Fond des Fahrzeugs 1 zu benutzen.

Der Nutzer wählt beispielsweise den Anzeigeinhalt 15a aus, indem er auf einen entsprechenden Bereich des Tablet-PCs 7 tippt, woraufhin dieser Teil der Cockpit-Ansicht vergrößert dargestellt wird, wie dies in der Figur 3b dargestellt ist. Ihm kann weiterhin ein größere Detailtiefe als zuvor dargestellt werden. Ihm wird z.B. eine graphische Repräsentation des zyklischen Wahlhebel zum Durchwechseln einer kombinierten Verbrauchs- und Reichweitendarstellung (in der Figur 1 und 2 nicht dargestellt) als bedienbare Schaltfläche 15f dargestellt. So könnte der Nutzer beispielsweise die Restreichweite und andere so auslesbare Betriebsparameter auslesen, ohne dabei den Fahrer des Fahrzeugs 1 ablenken zu müssen. Über eine geeignete Schaltfläche (nicht dargestellt) kann der Nutzer wieder zu der in der Figur 3a gezeigten Darstellung gelangen.

Alternativ wählt der Nutzer nun den Anzeigeinhalt 15b aus, woraufhin ihm eine vergrößerte Darstellung des Anzeigeinhalts 14a des Multifunktionsdisplays 4 dargestellt wird, wie dies in der Figur 3c dargestellt ist. Dabei werden ihm die Anzeigeinhalte wiederum als Schaltflächen dargestellt. Auch hier können ihm weitere Anzeigefelder 15g angezeigt werden, über die tiefergehende Details zum Anzeigeinhalt 15b angezeigt werden können. Die Anzeigeinhalte 14a, 15b gehören im gezeigten Falle zu einer Infotainmentanwendung, z.B. das Verzeichnis von abspielbaren Musiktiteln. Beide Anzeigeinhalte 14a, 15b sind synchronisiert. Wählt also entweder der Nutzer über das Tablet-PC 7 oder der Fahrer bzw. Beifahrer über das Multifunktionsdisplay 4 einen Musiktitel aus, so wird sich bei einer Änderung eines der Anzeigeinhalte 14a, 15b auch der entsprechend andere Anzeigeinhalt verändern.

Für verschiedene Fahrzeugfunktionen kann es weniger wünschenswert sein, dass ein beliebiger Nutzer globale Fahrzeugfunktionen verändert. Zu den globalen Fahrzeugfunktionen zählen die Anzeigeinhalte 14a, 14b des Multifunktionsdisplays 4, aber auch z.B. allgemeine Klimaeinstellungen des Fahrzeugs 1. Dies könnte insbesondere bei größeren Fahrzeugen, z.B. bei Kleinbussen, zu unübersichtlichen Bediensituationen führen. Daher kann vorgesehen sein, dass bei solchen Fahrzeugen und/oder bei bestimmten Funktionen zunächst eine Nachricht für den Fahrer auf dem Multifunktionsdisplay 4 ausgegeben wird, die vom Fahrer oder Beifahrer zu bestätigen sind (nicht dargestellt).

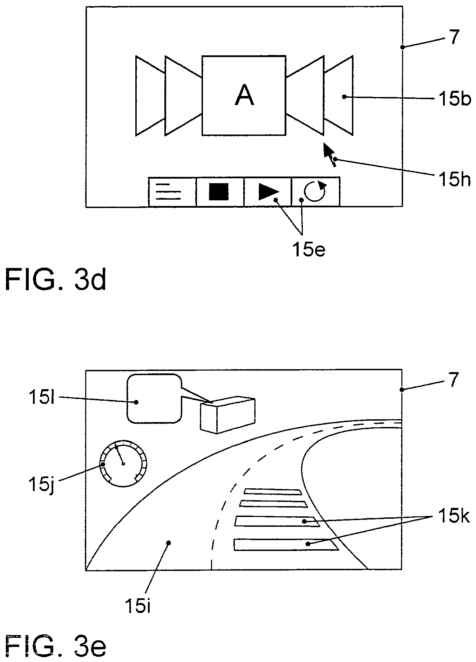

Für eine komfortablere Bedienung kann der Nutzer den Tablet-PC 7 in eine seinem Sitzplatz zugeordnete Halterung 10 einstecken. In diesem Falle verändert sich die Anzeige in der Figur 3d gegenüber der Anzeige in der Figur 3c dahingehend, dass die Schaltflächen 15e deaktiviert werden und in einen anderen Bedienmodus gewechselt wird. Es wird dabei die Bedienung über den Touchscreen komplett ausgeschaltet und dafür eine Bedienung über ein dem jeweiligen Sitzplatz zugeordnetes Touchpad 11, das z.B. neben dem jeweiligen Sitz in den Armablagen oder in einer seitlichen Tür angeordnet ist, ermöglicht. Dazu kann dem Nutzer ein Cursor oder ein Mauszeiger 15h angezeigt werden, dessen Position auf dem Tablet-PC über das Touchpad 11 gesteuert werden kann. Die Steuerung der Anzeigeinhalte und das Auslösen der Fahrzeugfunktion kann nun auf analoge Weise über das Touchpad 11 und den angezeigten Mauszeiger 15h erfolgen. Findet für eine definierte Zeitspanne keine Nutzerbedienung über den Touchpad 11 statt, so kann der Mauszeiger 15h ganz ausgeblendet werden und erst bei einer erneuten Bedienaktion wieder angezeigt werden.

In weiteren Bedienmodi hat der Nutzer beispielsweise die Möglichkeit, sich Bilder einer vorwärts gerichteten Kamera auf dem Tablet-PC 7 darstellen zu lassen, wie dies in der Figur 3e dargestellt ist. Dabei kann ihm das angezeigte Bild graphisch bearbeitet und verbessert werden, indem ihm die Fahrbahnmarkierung 15i, ein visualisierter Bremsweg 15 k oder Informationen zu Sonderzielen 15l in das von der Kamera erfasste Bild hineinprojiziert wird. Ferner kann ihm beispielsweise auch hier eine Visualisierung wichtiger Betriebsparameter, wie die Anzeige einer Tachometeruhr 15j, abgezeigt werden.

In einem noch weiteren Betriebsmodus hat der Nutzer die Möglichkeit, auf dem Tablet-PC 7 gespeicherte Medieninhalte über die im Fahrzeug verfügbaren Ausgabegeräte auszugeben. So könnte er z.B. eine Musikdatei über den Fahrzeuglautsprecher und einen Videoclip über das Multifunktionsdisplay 4 ausgeben (nicht dargestellt).

### Bezugszeichenliste

- 1: Fahrzeug
- 2: Fahrersitz
- 3: Kombianzeige mit Rundinstrumenten
- 4: Multifunktionsdisplay
- 5: Tastschalter der Multifunktionsanzeige
- 6: Drehschalter
- 7: Tablet-PC
- 8: Funkschnittstelle
- 9: Steuereinheit
- 10: Halterung
- 11: Touchpad für Rücksitze
- 12: Datenbus im Fahrzeug
- 13: Betriebsparametersensoren
- 14a, b: Anzeigeinhalt auf Multifunktionsdisplay
- 15a - l: Anzeigeinhalte auf Tablet-PC

## Patentansprüche

1. Verfahren zum Bereitstellen einer Nutzerschnittstelle in einem Fahrzeug (1), bei dem
- für den Betrieb des Fahrzeugs relevante Betriebsparameter fahrzeugseitig erfasst werden,
- über eine von der Sitzposition des Fahrers (2) ablesbare, fest im Fahrzeug (1) angeordnete Anzeige- und Bedieneinrichtung (3, 4, 5, 6) Informationen über erfasste Betriebsparameter angezeigt werden,
- eine drahtlose Datenverbindung (8) zwischen dem Fahrzeug (1) und einem mobilen Wiedergabegerät (7), das in dem Fahrzeug (1) lösbar verbunden ist oder das von einem Nutzer in dem Fahrzeug (1) frei gehalten wird, aufgebaut wird,
- Daten zur Erzeugung eines Anzeigeinhalts (15a - 15l) über die drahtlose Datenverbindung (8) vom Fahrzeug (1) an das mobile Wiedergabegerät (7) übertragen werden und
basierend auf den übertragenen Daten ein Anzeigeinhalt (15a - 15l) auf dem mobilen Wiedergabegerät (7) erzeugt wird, welcher auf der Anzeige- und Bedieneinrichtung (3, 4, 5, 6) angezeigte Informationen über erfasste Betriebsparameter umfasst, wobei auf dem mobilen Wiedergabegerät (7) wenigstens ein Teil der aus der Sitzposition des Fahrers bedienbaren Bedienelemente (5, 6) wiedergegeben werden, wobei mittels einem der auf dem mobilen Wiedergabegerät (7) wiedergegebenen Bedienelemente (15c - 15f) eine Fahrzeugfunktion bedient wird, wobei mechanische Bedienelemente (5, 6) durch Symbole dargestellt werden,
**dadurch gekennzeichnet, dass**
- das mobile Wiedergabegerät (7) an einer Position, welche einer bestimmten Sitzposition zugeordnet ist, lösbar in dem Fahrzeug (1) befestigt wird, und dass
- in einen anderen Bedienmodus gewechselt wird, wenn das mobile Wiedergabegerät (7) in eine der Sitzposition zugeordneten Halterung (10) eingesteckt wird, in dem das mobile Wiedergabegerät (7) über ein dieser Sitzposition zugeordnetes, fest im Fahrzeug (1) eingebautes Bedienelement (11) bedient wird.

2. Verfahren nach Anspruch 1,
**dadurch gekennzeichnet, dass**
- auf dem mobilen Wiedergabegerät (7) ein Teilbereich des Anzeigeinhalts (15a; 15b), der von der auf der Anzeige- und Bedieneinrichtung (3, 4, 5, 6) angezeigten Information umfasst ist, ausgewählt wird und
- der ausgewählte Teilbereich des Anzeigeinhalts (15a; 15b) hervorgehoben und/oder vergrößert dargestellt wird.

3. Verfahren nach einem der Ansprüche 1 oder 2,
**dadurch gekennzeichnet, dass**
auf dem mobilen Wiedergabegerät (7) wenigstens ein Teil der aus der Sitzposition des Fahrers (2) ablesbaren Funktionsanzeigen (3, 4) wiedergegeben werden, wobei mechanische analoge Funktionsanzeigen (3) durch Symbole dargestellt werden.

4. Verfahren nach Anspruch 3,
**dadurch gekennzeichnet,**
**dass** durch die Bedienung eines auf dem mobilen Wiedergabegerät (7) wiedergegebenen Bedienelements (15c - 15f) der Anzeigeinhalt (14a) der Anzeige- und Bedieneinrichtung (3, 4, 5, 6) verändert wird.

5. Verfahren nach Anspruch 3 oder 4,
**dadurch gekennzeichnet,**
**dass** durch die Bedienung eines auf dem mobilen Wiedergabegerät (7) wiedergegebenen Bedienelements (15c - 15f) eine Mitteilung an den Fahrer des Fahrzeugs (1) übermittelt wird.

6. System zum Bereitstellen einer Nutzerschnittstelle in einem Fahrzeug (1) mit
- einer im Fahrzeug (1) fest angeordneten Erfassungseinrichtung (13), über welche für den Betrieb des Fahrzeugs (1) relevante Betriebsparameter fahrzeugseitig erfassbar sind,
- einer aus der Sitzposition des Fahrers (2) ablesbaren, fest im Fahrzeug (1) angeordneten Anzeige- und Bedieneinrichtung (3, 4, 5, 6), über welche Informationen, insbesondere Informationen über erfasste Betriebsparameter, anzeigbar sind,
- einem lösbar mit dem Fahrzeug (1) verbundenen oder von einem Nutzer im Fahrzeug (1) frei gehaltenen, mobilen Wiedergabegerät (7),
- einer drahtlosen Datenschnittstelle (8) zwischen dem mobilen Wiedergabegerät (7) und dem Fahrzeug (1), über welche Daten zur Erzeugung eines Anzeigeinhalts (15a - 15l) vom Fahrzeug (1) an das mobile Wiedergabegerät (7) übertragbar sind, und
- einer Steuereinheit (9), die mit der Erfassungseinrichtung (13), der Anzeige- und Bedieneinrichtung (3, 4, 5, 6)und der Datenschnittstelle (8) verbunden ist, und
- mittels der Steuereinheit (9) basierend auf den übertragenen Daten ein Anzeigeinhalt (15a, 15l) auf dem mobilen Wiedergabegerät (7) erzeugbar ist, welcher auf der Anzeige- und Bedieneinrichtung (3, 4, 5, 6) angezeigte Informationen über erfasste Betriebsparameter umfasst, wobei auf dem mobilen Wiedergabegerät (7) wenigstens ein Teil der aus der Sitzposition des Fahrers bedienbare Bedienelemente (5, 6) wiedergebbar sind, wobei mittels einem der auf dem mobilen Wiedergabegerät (7) wiedergegebenen Bedienelemente (15c - 15f) eine Fahrzeugfunktion bedienbar ist, wobei mechanische Bedienelemente (5, 6) durch Symbole darstellbar sind,
**dadurch gekennzeichnet, dass**
das mobile Wiedergabegerät (7) an einer Position, welche einer bestimmten Sitzposition zugeordnet ist, lösbar in dem Fahrzeug (1) befestigt ist, wobei das mobile Wiedergabegerät (7) in eine der Sitzposition zugeordneten Halterung (10) eingesteckt ist, so dass es in einen anderen Bedienmodus wechselt, in dem das mobile Wiedergabegerät (7) über ein dieser Sitzposition zugeordnetes, fest im Fahrzeug (1) eingebautes Bedienelement (11) bedienbar ist.

7. System nach Anspruch 6,
**dadurch gekennzeichnet,**
**dass** das mobile Wiedergabegerät (7) lösbar in dem Fahrzeug (1) befestigt ist, sodass der Anzeigeinhalt (15a - 15l) an einer nicht aus der Sitzposition des Fahrers (2) betrachtbaren Position des Fahrzeugs (1), insbesondere auf einem der Rücksitze des Fahrzeugs (1), wiedergegeben wird.

8. System nach einem der Ansprüche 6 oder,
**dadurch gekennzeichnet, dass**
- das mobile Wiedergabegerät (7) lösbar in dem Fahrzeug (1) befestigt ist und
- das mobile Wiedergabegerät (7) über ein dem Fahrzeug (1) zugeordnetes Bedienelement (11), insbesondere einer berührungsempfindlichen Bedienfläche, bedienbar ist.

## Claims

1. Method for providing a user interface in a vehicle (1), in which
- operating parameters that are relevant to the operation of the vehicle are captured at the vehicle,
- a display and operator control device (3, 4, 5, 6) that is arranged permanently in the vehicle (1) and that can be read from the seat position of the driver (2) is used to display information about captured operating parameters,
- a wireless data link (8) is set up between the vehicle (1) and a mobile reproduction appliance (7) that is detachably connected in the vehicle (1) or that is freely held by a user in the vehicle (1),
- data for producing a display content (15a-151) are transmitted from the vehicle (1) to the mobile reproduction appliance (7) via the wireless data link (8), and
the transmitted data are taken as a basis for producing a display content (15a-151) on the mobile reproduction appliance (7), which display content comprises information about captured operating parameters that is displayed on the display and operator control device (3, 4, 5, 6), wherein at least some of the operator control elements (5, 6) that can be controlled from the seat position of the driver are reproduced on the mobile reproduction appliance (7), wherein one of the operator control elements (15c-15f) that are reproduced on the mobile reproduction appliance (7) is used to control a vehicle function, wherein mechanical operator control elements (5, 6) are presented by symbols, **characterized in that**
- the mobile reproduction appliance (7) is detachably mounted in the vehicle (1) at a position that is associated with a particular seat position, and **in that**
- it changes to a different mode of operation if the mobile reproduction appliance (7) is inserted into a bracket (10) associated with the seat position, in which different mode of operation the mobile reproduction appliance (7) is controlled by means of an operator control element (11), associated with this seat position, that is installed permanently in the vehicle (1).

2. Method according to Claim 1,
**characterized in that**
- a subregion of the display content (15a; 15b) that the information displayed on the display and operator control device (3, 4, 5, 6) comprises is selected on the mobile reproduction appliance (7), and
- the selected subregion of the display content (15a; 15b) is presented in highlighted form and/or in enlarged form.

3. Method according to either of Claims 1 and 2, **characterized in that** at least some of the function displays (3, 4) that can be read from the seat position of the driver (2) are reproduced on the mobile reproduction appliance (7), wherein mechanical analogue function displays (3) are presented by symbols.

4. Method according to Claim 3,
**characterized**
**in that** the operator control of an operator control element (15c-15f) that is reproduced on the mobile reproduction appliance (7) alters the display content (14a) of the display and operator control device (3, 4, 5, 6) .

5. Method according to Claim 3 or 4,
**characterized**
**in that** the operator control of an operator control element (15c-15f) that is reproduced on the mobile reproduction appliance (7) transmits an announcement to the driver of the vehicle (1).

6. System for providing a user interface in a vehicle (1) having
- a capture device (13) that is permanently arranged in the vehicle (1) and that can be used to capture operating parameters that are relevant to the operation of the vehicle (1) at the vehicle,
- a display and operator control device (3, 4, 5, 6) that is arranged permanently in the vehicle (1), that can be read from the seat position of the driver (2) and that can be used to display information, particularly information about captured operating parameters,
- a mobile reproduction appliance (7) that is connected detachably to the vehicle (1) or that is freely held by a user in the vehicle (1),
- a wireless data interface (8) between the mobile reproduction appliance (7) and the vehicle (1) that can be used to transmit data for producing a display content (15a-151) from the vehicle (1) to the mobile reproduction appliance (7), and
- a control unit (9) that is connected to the capture device (13), the display and operator control device (3, 4, 5, 6) and the data interface (8), and
- the control unit (9) can be used to take the transmitted data as a basis for producing a display content (15a, 151) on the mobile reproduction appliance (7), which display content comprises information about captured operating parameters that is displayed on the display and operator control device (3, 4, 5, 6), wherein at least some of the operator control elements (5, 6) that can be controlled from the seat position of the driver are reproducible on the mobile reproduction appliance (7), wherein one of the operator control elements (15c - 15f) that are reproduced on the mobile reproduction appliance (7) can be used to control a vehicle function, wherein mechanical operator control elements (5, 6) are presentable by symbols,
**characterized in that**
the mobile reproduction appliance (7) is detachably mounted in the vehicle (1) at a position that is associated with a particular seat position, wherein the mobile reproduction appliance (7) is inserted into a bracket (10) associated with the seat position, so that it changes to a different mode of operation in which the mobile reproduction appliance (7) is controllable by means of an operator control element (11), associated with this seat position, that is installed permanently in the vehicle (1).

7. System according to Claim 6,
**characterized**
**in that** the mobile reproduction appliance (7) is mounted detachably in the vehicle (1), as a result of which the display content (15a-151) is reproduced at a position in the vehicle (1) that cannot be viewed from the seat position of the driver (2), in particular in one of the rear seats of the vehicle (1).

8. System according to either of Claims 6 and , **characterized in that**
- the mobile reproduction appliance (7) is mounted detachably in the vehicle (1) and
- the mobile reproduction appliance (7) can be controlled using an operator control element (11) associated with the vehicle (1), particularly a touch-sensitive operator control panel.

## Revendications

1. Procédé de fourniture d'une interface utilisateur dans un véhicule (1), selon lequel
- les paramètres de fonctionnement pertinents pour le fonctionnement du véhicule sont acquis du côté du véhicule,
- des informations à propos des paramètres de fonctionnement acquis sont affichées par le biais d'un dispositif d'affichage et de commande (3, 4, 5, 6) monté en position fixe dans le véhicule (1) et lisible depuis la position assise du conducteur (2),
- une liaison de données sans fil (8) est établie entre le véhicule (1) et un appareil de reproduction mobile (7), lequel est relié de manière amovible dans le véhicule (1) ou qui est tenu librement par un utilisateur dans le véhicule (1),
- des données destinées à générer un contenu d'affichage (15a - 15l) sont transmises par le biais de la liaison de données sans fil (8) du véhicule (1) à l'appareil de reproduction mobile (7) et
un contenu d'affichage (15a - 15l) est généré sur l'appareil de reproduction mobile (7) sur la base des données transmises, lequel comprend les informations à propos des paramètres de fonctionnement acquis affichées sur le dispositif d'affichage et de commande (3, 4, 5, 6), au moins une partie des éléments de commande (5, 6) actionnables depuis la position assise du conducteur (2) étant reproduits sur l'appareil de reproduction mobile (7), une fonction du véhicule étant commandée au moyen de l'un des éléments de commande (15c-15f) reproduits sur l'appareil de reproduction mobile (7), les éléments de commande (5, 6) étant représentés par des symboles,
**caractérisé en ce que**
- l'appareil de reproduction mobile (7) est fixé de manière amovible dans le véhicule (1) à une position qui est associée à une position assise définie, et **en ce que**
- un passage dans un autre mode de commande est effectué lorsque l'appareil de reproduction mobile (7) est inséré dans un support (10) associé à la position assise, dans lequel l'appareil de reproduction mobile (7) est commandé par le biais d'un élément de commande (11) associé à cette position assise et monté en position fixe dans le véhicule (1).

2. Procédé selon la revendication 1, **caractérisé en ce que**
- une zone partielle du contenu d'affichage (15a ; 15b), laquelle est entourée par les informations affichées sur le dispositif d'affichage et de commande (3, 4, 5, 6), est sélectionnée sur l'appareil de reproduction mobile (7) et
- la zone partielle du contenu d'affichage (15a ; 15b) est représentée en étant mise en valeur et ou agrandie.

3. Procédé selon l'une des revendications 1 ou 2, **caractérisé en ce qu'**au moins une partie des indicateurs de fonction (3, 4) pouvant être lus depuis la position assise du conducteur (2) sont reproduits sur l'appareil de reproduction mobile (7), les indicateurs de fonction (3) analogiques mécaniques étant représentés par des symboles.

4. Procédé selon la revendication 3, **caractérisé en ce que** le contenu d'affichage (14a) du dispositif d'affichage et de commande (3, 4, 5, 6) est modifié par l'actionnement d'un élément de commande (15c-15f) reproduit sur l'appareil de reproduction mobile (7).

5. Procédé selon la revendication 3 ou 4, **caractérisé en ce qu'**une notification est communiquée au conducteur du véhicule (1) par l'actionnement d'un élément de commande (15c-15f) reproduit sur l'appareil de reproduction mobile (7).

6. Système de fourniture d'une interface utilisateur dans un véhicule (1), comprenant
- un dispositif d'acquisition (13) monté en position fixe dans le véhicule (1), par le biais duquel peuvent être acquis du côté du véhicule les paramètres de fonctionnement pertinents pour le fonctionnement du véhicule (1),
- un dispositif d'affichage et de commande (3, 4, 5, 6) monté en position fixe dans le véhicule (1) et lisible depuis la position assise du conducteur (2), par le biais duquel peuvent être affichées des informations, notamment des informations à propos des paramètres de fonctionnement acquis,
- un appareil de reproduction mobile (7) relié de manière amovible avec le véhicule (1) ou tenu librement par un utilisateur dans le véhicule (1),
- une interface de données sans fil (8) entre l'appareil de reproduction mobile (7) et le véhicule (1), par le biais de laquelle des données destinées à générer un contenu d'affichage (15a - 15l) peuvent être transmises du véhicule (1) à l'appareil de reproduction mobile (7), et
- une unité de contrôle (9) qui est reliée au dispositif d'acquisition (13), au dispositif d'affichage et de commande (3, 4, 5, 6) et à l'interface de données (8), et
- un contenu d'affichage (15a, 151) peut être généré sur l'appareil de reproduction mobile (7) au moyen de l'unité de contrôle (9) sur la base des données transmises, lequel comprend les informations à propos des paramètres de fonctionnement acquis affichées sur le dispositif d'affichage et de commande (3, 4, 5, 6), au moins une partie des éléments de commande (5, 6) actionnables depuis la position assise du conducteur (2) pouvant être reproduits sur l'appareil de reproduction mobile (7), une fonction du véhicule pouvant être commandée au moyen de l'un des éléments de commande (15c-15f) reproduits sur l'appareil de reproduction mobile (7), les éléments de commande (5, 6) pouvant être représentés par des symboles,
**caractérisé en ce que**
l'appareil de reproduction mobile (7) est fixé de manière amovible dans le véhicule (1) à une position qui est associée à une position assise définie, l'appareil de reproduction mobile (7) étant inséré dans un support (10) associé à la position assise, de sorte qu'il passe dans un autre mode de commande dans lequel l'appareil de reproduction mobile (7) peut être commandé par le biais d'un élément de commande (11) associé à cette position assise et monté en position fixe dans le véhicule (1).

7. Système selon la revendication 6, **caractérisé en ce que** l'appareil de reproduction mobile (7) est fixé de manière amovible dans le véhicule (1), de sorte que le contenu d'affichage (15a - 151) est reproduit au niveau d'une position du véhicule (1) qui ne peut pas observée depuis la position assise du conducteur (2), notamment sur l'un des sièges arrières du véhicule (1).

8. Système selon l'une des revendications 6 ou , **caractérisé en ce que**
- l'appareil de reproduction mobile (7) est fixé de manière amovible dans le véhicule (1) et
- l'appareil de reproduction mobile (7) peut être commandé par le biais d'un élément de commande (11) associé au véhicule (1), notamment une surface de commande tactile.
